# EUROPEAN PATENT SPECIFICATION

(11) **EP 3 423 782 B1**
(45) Date of publication and mention of the grant of the patent: **26.01.2022**
(21) Application number: 15823404.7
(22) Date of filing: 30.11.2015
(51) Int. Cl.: G01B 9/02, G01M 11/02, G01M 11/00, G01B 11/06

(54) **DEVICE AND METHOD FOR MEASURING THE PARAMETERS OF PHASE ELEMENTS**
VORRICHTUNG UND VERFAHREN ZUR MESSUNG DER PARAMETER VON PHASENELEMENTEN
DISPOSITIF ET PROCÉDÉ DE MESURE DES PARAMÈTRES D'ÉLÉMENTS DE PHASE

(30) Priority: 18.09.2015 PL 41406415
(43) Date of publication of application: 09.01.2019
(73) Proprietor: Polskie Centrum Fotoniki i Swiatlowodów, 20-061 Lublin (PL)
(72) Inventor: STEPIEN, Karol, 01-134 Warszawa (PL); JÓZWIK, Michalina, 16-300 Augustów (PL); NAPIERALA, Marek, 01-476 Warszawa (PL); ZIOLOWICZ, Anna, 25-752 Kielce (PL); SZOSTKIEWICZ, Lukasz, 97-100 Torun (PL); MURAWSKI, Michal, 01-318 Warszawa (PL); LIPINSKI, Stanislaw, 13-240 Ilowo (PL); HOLDYNSKI, Zbigniew, 01-129 Warszawa (PL); STANCZYK, Tomasz, 05-500 Piaseczno (PL); NASILOWSKI, Tomasz, 00-172 Warszawa (PL)
(74) Representative: Bury & Bury
(86) International application number: PCT/PL2015/050065
(87) International publication number: WO 2017/048141

(56) References cited:
- WO-A1-2014/208572
- US-A1- 2009 097 036
- US-A1- 2010 134 787
- US-A1- 2014 253 907
- PETR HLUBINA ET AL: "Differential group refractive index dispersion of glasses of optical fibres measured by a white-light spectral interferometric technique; Differential group refractive index dispersion", MEASUREMENT SCIENCE AND TECHNOLOGY, IOP, BRISTOL, GB, vol. 18, no. 5, 27 March 2007 (2007-03-27) , pages 1547-1552, XP020118643, ISSN: 0957-0233, DOI: 10.1088/0957-0233/18/5/046
- JI YONG LEE AND DUG YOUNG KIM: "Versatile chromatic dispersion measurement of a single mode fiber using spectral white light interferometry", OPTICS EXPRESS, OSA (OPTICAL SOCIETY OF AMERICA), WASHINGTON DC, (US), vol. 14, no. 24, 27 November 2006 (2006-11-27), pages 11608-11615, XP008133031, ISSN: 1094-4087
- None

## Description

The subject of the invention is a device for measuring the parameters of phase elements and a method therefor. The parameters of phase elements, including, but not limited to lenses, are *inter alia* the refractive index and thickness. The device and the method applies white light interference (low-coherence interference). The device and the method are also applied in dispersion measurements, in particular to measure the dispersion of dispersion compensating optical fibers, i.e. optical fibers characterized by considerably higher (absolute) dispersion values, compared to standard optical fibers used in telecommunication.

Technical practice defines several methods of measuring the parameters of phase elements, including their refractive indexes and thickness, applying various physical phenomena and effects. The following contact techniques are known: measurements with the use of indicators, measurements with the use of coordinate-measuring machines (CMM), which, by collecting a cloud of points, generates information on the profile of a phase element, including its thickness, as well as the simplest caliper measurements. The contact methods known include: interferometric, ellipsometric, and ATR-based methods (attenuated total reflection and internal reflection, attenuated total reflection infrared spectroscopy).

One of the challenges in the measurement of phase element parameters is to perform maximally precise measurements of the phase element parameters without touching their surface with the mechanical parts of the measurement setup. Contact methods can result in damage, particularly mechanical, of the tested element and its surface, and require precise assembly of both the phase element and the measurement unit, which is very difficult in industrial conditions. What is more, the familiar contact methods are not dedicated to measurements of concave lenses with a big radius of curvature except for laboratory measurements, and the possible cost of purchase of precise instrumentation often exceeds the value of an entire production line.

Article titled "Measurement of the refractive index and thickness for lens by confocal technique" by Yun Wang, Lirong Qiu, Jiamiao Yang and Weiqian Zhao (Optik - International Journal for Light and Electron Optics, 2013) describes a method of determining the refractive index or the thickness of a phase element in a confocal system. The technique applies the ray tracing method. After passing through a lens, a beam of light is focused in a central point of the first tested surface of the phase element, and then redirected to a mirror. The lens is shifted in reference to the tested surface of the phase element. The value of the focus curve peak is tested according to changing positions of the phase element in reference to the focal distance of the lens. After being directed to the detector, the signal is processed by a calculation algorithm. Before performing the measurement, the system is aligned, and the accuracy of alignment determines the precision of measurement. Signal is entered to the measurement system by a beam splitter cube. The application of bulk optics (in this case, the beam splitter cube) increases the risk of de-aligning the system due to the possibility of dusting or moving the element.

A ray tracing method has been also described by the authors of the publication titled "Laser differential confocal lens thickness measurement" by Yun Wang, Lirong Qiu, Yanxing Song and Weiqian Zhao (Measurement Science and Technology, 2012), where the authors apply a confocal system. In contrast to the former article, this method assumes system modification consisting in the application of differential measurement, which entails the use of a second detector. Such measurements are more precise on the one hand, but on the other hand, require extended measurement duration and calculation powers.

Article titled "Low coherence interferometry for central thickness measurement of rigid and soft contact lenses" by Verrier I., Veillas C., and Lepine T. (Optics Express, 2009) describes a method of measuring the thickness of contact lenses with the use of low-coherence light sources. In this method, a light beam is directed to a system consisting of two interferometers: a Mach-Zehnder interferometer and a SISAM correlator system, an acronym of two words: "interferential spectrometer by selection of amplitude modulation", which consists of two diffraction gratings, a beam splitter, lenses and a CCD camera for signal detection. An essential advantage of this method is that it is contact-less, but requires the application of complex mathematical algorithms to eliminate the dispersion effect. The system is characterized by the use of a set of elements and mirrors, whereas a larger number of elements calls for the need to apply a source with higher output power. In essence, increasing the number of elements in the system raises the cost and the risk of shifts which have negative effect on maintaining the beam on the default track. The accuracy of the system is also determined by the resolution of the camera applied.

Other familiar measurement techniques combine white light interferometry (low-coherence interferometry) with confocal measurement techniques, as described in detail in article titled "Simultaneous measurement of refractive index and thickness by combining low-coherence interferometry and confocal optics" by Seokhan Kim, Jihoon Na, Myoung Jin Kim, and Byeong Ha Lee (Optics Express, 2008). In this method, beam splitting for interferometry is performed in the beam splitter cube. Measurements of the refractive index and thickness of lenses require the application of two systems.

Patent ref. US7433027 describes a device and non-contact method of measuring lens thickness (in particular of corrective lenses for glasses) applying volumetric optics. The operation principle of the system is based on data collection by means of an imaging system comprising a camera with a CCD matrix. After completing the measurement, the phase element must be turned by a dedicated handle. Using image processing methods, it is possible to obtain a 3D image of the measured phase element.

Patent application ref. 20070002331 A1 describes a method of measuring molds/lenses during production. The method is based on the use of interferometer measurements applying volumetric optics.

Patent application ref. US 20130278756 A1 presents a device and a method of measuring the thickness of transparent element by shifting the focal distance of the passing beam, then the thickness is determined according to Snell's law. The device comprises a camera focusing light on the surface of the measured object. This method can be used to achieve high accuracy. The method is not dedicated to measuring lenses, in which optical power occurs, since its presence causes a speck shift, and thus the possibility of measurement distortion.

Patent application ref. US 20140253907 A1 contains a description of measurement of the central thickness of a phase element, applying white light interference and coherent light interference. Change of optical distance is performed with the use of piezoelectric elements. Furthermore, the method applies the measurement of passing light wavefront applying a Shack-Hartmanm sensor. Other parameters of the phase element are calculated on the basis of the wavefront, such as the focal distance. Implementation of this measurement method requires the use of three light sources. The device applies optical fibers, which are wound on a piezoelectric used to change the optical path between the interferometer arms.

Technical practice defines the problem of measuring the dispersion of phase velocity (hereinafter: dispersion), in particularly of optical fibers. Measurement of this parameter is key for the development of techniques compensating peak expansion in telecommunication lines. The more compensating a fiber is (the higher its dispersion in absolute terms), the smaller the length which is to be established on the telecommunication line in order to recreate the input signal.

An example of a system for measuring the dispersion of optical fibers is described i. a. in article titled "Experimental study of dispersion characteristics for a series of microstructured fibers for customized supercontinuum generation" by Z. Holdynski et. al. (Optics Express 2013). In this method, thanks to the application of white light interferometry in the configuration of Michelson's interferometer, it is possible to obtain high accuracy, however, measuring range is limited due to the occurrence of a relatively small difference in the value of chromatic dispersion between the measured optical fiber and a reference optical fiber (in the case of this method, it is e.g. standard single-mode optical fiber, e.g. SMF-28 by Corning). Effectively means that dispersion larger than minus several dozen ps/(nm·km) cannot be measured. Due to negative dispersion in dispersion compensating optical fibers, wherever the phrase "higher dispersion" occurs in the patent, this stands for an absolutely higher value. For instance, dispersion of (-100) ps/(nm·km) is larger than dispersion of (-18) ps/(nm·km).

Other methods of measuring optical fiber dispersion base i. a. on the direct application of the definition of dispersion, that is the measurement of the pulse broadening with specified distance or the measurement of time delay as a function of the wavelength. Using such measurement methods, optical fibers with small dispersions enforce large parts of optical fiber. In turn, in the case of optical fibers with large dispersions, in the case of peak broadening is observed at a small distance, a problem occurs with the attenuation properties of these optical fibers. Such optical fibers are usually fabricated out of soft glass, due to which they have loss of several dB/m. In result, signal can be measured with the use of small parts of the fiber, and when applying sections of several dozen cm, assembly of the optical fiber section in the measurement system is difficult, or even impossible. Shortening too much the measured optical fiber has negative effect on the ability to observe peak broadening.

Patent ref. US 4799789 A describes a method of measuring group velocity dispersion. The measurement method takes advantage of the fact that each wavelength has a different propagation time in a given dispersion medium, and measurement consists in the measurement of the time of propagation of light through the measured and the reference optical fibers. A cascade of diode lasers is applied as the source of light (or LED diodes, depending on the configuration) with varying length of the generated wave, thanks to which it is possible to change the wavelength in both optical fibers. By scanning the propagation time of the beam as a spectrum function, we obtain group velocity dispersion.

Patent application ref. WO 2006118911 describes a measurement of longitudinal dispersion (as the distance function), which is performed with the use of this dispersion measurement method as the wavelength function. The method is dedicated to the measurement of traditional telecommunication fibers, in which the length of the optical fiber is not limited due to losses.

Patent ref. US 2010134787 relates to a measurement method of the chromatic dispersion of an optical waveguide using an optical interferometer with a broadband multi-wavelength light source and an optical spectrum analyzing apparatus, wherein one arm, called "reference arm" of the interferometer's two arms has an adjustable air spacing and the other arm, called "sample arm" can contain said optical waveguide to be measured, and including the following measurement and analysis steps: measuring interference spectra of the optical beam output exiting from the said interferometer with an optical spectrum analyzing apparatus when said optical waveguide is connected to said sample arm, and when said optical waveguide is not connected to said sample arm respectively; by adjusting the reference arm length for appearance of clear interference patterns; converting the wavelength-domain interference spectra into frequency-domain interference spectra and calculating phase difference values of the interference peaks of one of the spectra from a predetermined reference peak as a function of the frequency change by counting the interference peak (or valley) points; finding a Taylor series curve fit function for each set of the phase difference value data corresponding to each of the two interference spectra; and calculating a chromatic dispersion coefficient of the optical waveguide by using the coefficients of the Taylor series curve fit functions.

In document WO2014208572, the refractive index of a test object is measured with high precision. The invention relates to a method for measuring a refractive index of a test object by splitting light from a light source into test light and reference light and measuring interference light resulting from interference between the reference light and the test light transmitted through the test object. In the method, the test object is arranged in a medium whose group refractive index is equal to a group refractive index of the test object at a particular wavelength, interference light is measured, the particular wavelength is determined based on a wavelength dependence of a phase difference between the test light and the reference light, and the group refractive index of the medium corresponding to the particular wavelength is calculated as the group refractive index of the test object corresponding to the particular wavelength.

In the article "Differential group refractive index dispersion of glasses of optical fibres measured by a white-light spectral interferometric technique" by Petr Hlubina et. Al published in Measurement Science And Technology is described white-light interferometric technique employing a low-resolution spectrometer to measure the differential group refractive index of glasses of optical fibres over a wide wavelength range. The technique utilizes an unbalanced Mach-Zehnder interferometer with a fibre under test of known length inserted in one of the interferometer arms and the other arm with adjustable path length.

In patent ref. US 2009097036 is described a system and method to determine chromatic dispersion in short lengths of waveguides using a two wave interference pattern and a common path interferometer. Specifically the invention comprises a radiation source operable to emit radiation connected to a means for separating incident and reflected waves; the means for separating incident and reflected waves possessing an output arm adjacent to a first end of the waveguide; and the means for separating incident and reflected waves further connected to an optical detector operable to record an interference pattern generated by a reflected test emission from the radiation source. The interference pattern consists of two waves: one reflected from a first facet of a waveguide and the second reflected from a second facet of the same waveguide.

In the article J. Y. Lee and D. Y. Kim "Versatile chromatic dispersion measurement of a single mode fiber using spectral white light interferometry" published by Optics Express is described a versatile and accurate chromatic dispersion measurement method for single mode optical fibers over a wide spectral range (200 nm) using a spectral domain white light interferometer. This technique is based on spectral interferometry with a Mach-Zehnder interferometer setup and a broad band light source. It takes less than a second to obtain a spectral interferogram for a few tens of centimeter length fiber sample.

Therefore, the purpose of works on the invention was to develop a system, which would ensure the possibility of performing industrial measurements of the parameters of phase elements (e.g. the refractive index and thickness). One of the industrial requirements as part of quality control of the manufactured phase elements is i.e. control of their thickness. The majority of familiar systems reach very good parameters in this area - there is a possibility of performing measurements with the accuracy of several µm, or even µm parts. Insofar as the accuracy of such measurements is relatively satisfactory, the structures of measurement systems are not compact, and their operation enforces laboratory use only. Another hindrance posed by such systems is the need to provide highly qualified operation personnel. These problems are eliminated by the device according to the invention, which guarantees non-contact, non-destructive measurements which, apart from increasing measurement accuracy to below 1 µm, allow for performing compact and comfortable control measurements in uncomfortable industrial conditions. In order for the invention to fulfill the expectations posed for automatic measurements, elements of volumetric optics were resigned from wherever possible, which allows for direct assembly on the production line. For instance, solutions deriving from technical practice assume beam division predominantly in the beam splitter cube. Such beam division poses a risk of considerable measurement errors or generally the impossibility to perform measurements due to close correlation of beam splitting and temperature and mechanic conditions. In the solution according to the invention, this problem is solved by the application of beam splitting using fiber optic couplers. In such configuration, the element cannot be dusted and the temperature and vibrations do affect beam splitting at an insignificant level (moving the fiber optic coupler also remains without effect on the effectiveness of beam splitting, whereas such movement would prevent measurement when a cube is used). Furthermore, fiber optic elements are usually less expensive to their volumetric optics counterparts. The system according to the invention does not include CCD cameras, the use of which always induces uncertainty deriving from the possibility of losing a part of the information when the beam does not hit the matrix. In the solution according to the invention, the receiving fiber optic connector is fixed inside the head unit for the entire duration of measurement. When applying a low-coherence light source, dispersion of the measured element has effect on the measurement result. Thanks to the application of this measurement principle, it is possible to adopt the system in automatic measurements, whereas the cost of construction of the system is considerable lower compared to the examples quoted in the patent.

A device for measuring parameters of phase elements according to the invention is defined in claim 1. The device comprises a low-coherence light source, connected to an input fiber optic coupler splitting the light from the low-coherence light source to a reference arm and a measurement arm, and a detector configured to receive light from reference arm and measurement arm. The reference arm comprises a collimator located on a linear stage. Said device further has a second fiber optic coupler connected to a second light source delivering light to the reference arm and measurement arm and a second detector receiving light from reference arm and measurement arm. The linear stage is motorized linear stage and the second light source is coherent light source having a coherence length greater or equal to the range of motion of the motorized linear stage. The measurement arm comprises a first measurement collimator connected to the input optical coupler and facing a free space, which is adapted to receive measured phase element, and a second measurement collimator located at the opposite side of the free space and facing the first measurement collimator, the second measurement collimator being connected to the second fiber optic coupler. The reference arm comprises a first reference collimator connected to the input fiber optic coupler and facing a second reference collimator connected to the second fiber optic coupler wherein the second reference collimator is located on the motorized linear stage. The input optical coupler is connected tc the second detector, and the second optical coupler is connected to the first detector and the second light source.

The reference arm can further comprise a model phase element selected from a group including a lens, a plane-parallel plate, an optical fiber.

In a beneficial embodiment, the device in the reference arm it has a system movable in axes X-Y adapted for receiving measured phase element.

In a beneficial embodiment, the device in the reference arm it has a rotable system adapted for receiving measured phase element.

In addition, the measurement arm comprises a handle adapted to receive measured phase element, wherein said handle is movable along three axes and rotable around any of these axes.

In another embodiment,-a method of measuring optical properties of phase elements is defined in claim 6. Wherein light from the low-coherence light source and light from the second light source are directed respectively to the first and second fiber optic coupler inputs, where they are split into measuring arm and reference arm. Then motorized linear stage is moved with simultaneous, recording of the intensity of the light with the first and the second detector to collect two interferograms as a function of time corresponding to the movement of motorized linear stage. The method includes two steps:
the first step is a calibration of the device and a first position of motorized linear stage producing zero optical path difference is determined from the interferograms collected with the first and the second detector,
the second step is a measurement step in which the measured optical element is placed in the measurement arm of the device and a second position of motorized linear stage producing zero optical path difference is determined from interferograms collected with element under test placed in the measurement arm.

The properties of element under test are determined on the basis of difference between the first position and the second position.

In a beneficial embodiment, the element under test is mounted within a movable system.

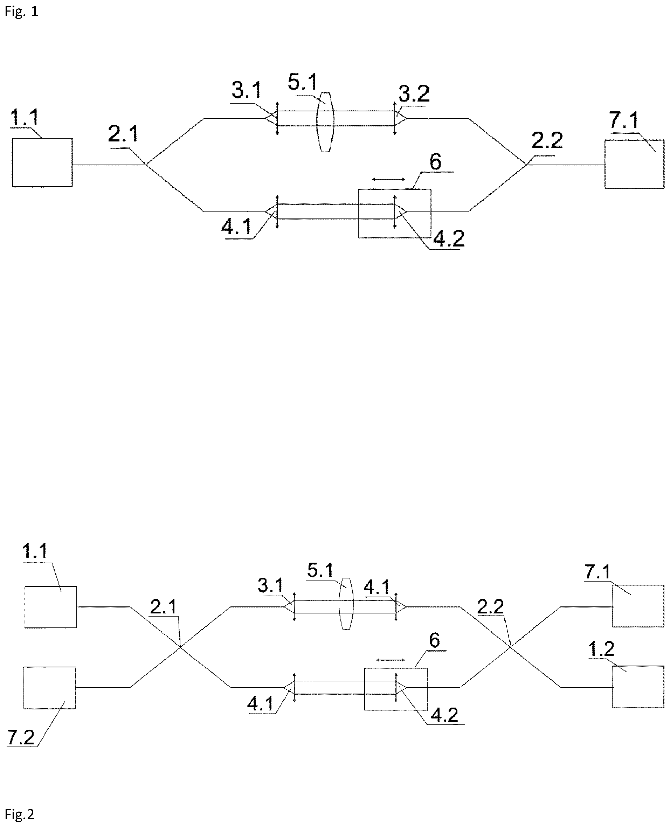

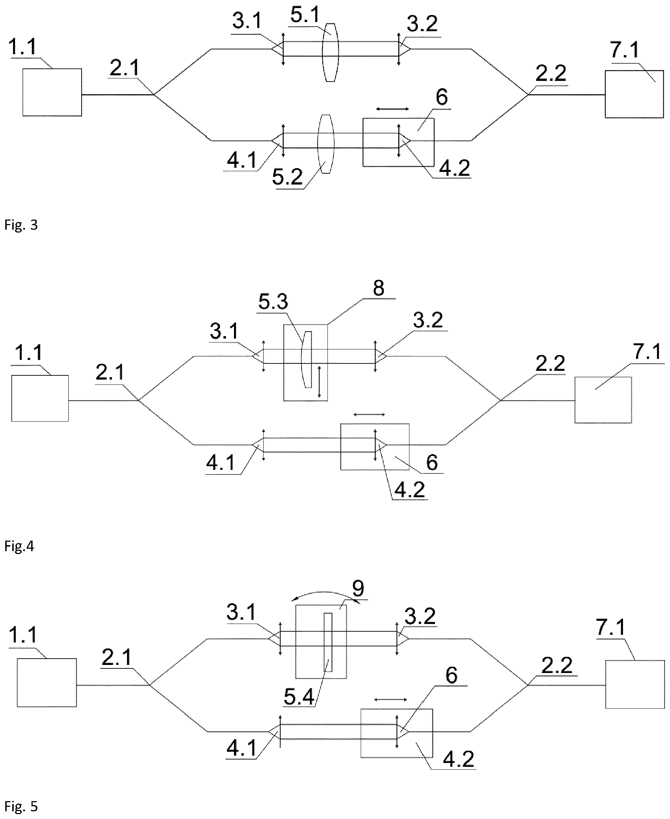

In a beneficial embodiment, the element under test is mounted within a rotable system. Fig. 1 presents an example not covered by the claims, in which signal from the low-coherent light source 1.1 is directed to a fiber optic coupler 2.1, then from optical fibers comprising the fiber optic coupler, signal passes to collimators 3.1 and 4.1. Fig. 2 presents the invention applying coherent and low-coherence light sources, Fig. 3 presents the invention in a variant used for measurements applying model phase element, Fig. 4 presents the invention in a configuration for measuring the curve of the phase element, Fig. 5 presents a beneficial embodiment of the invention, used for measuring the refractive index of plane-parallel plates, in which data for two various plate inclinations are collected,

### Example 1, not covered by the appended claims

A device for measuring the parameters of phase elements comprising: a low-coherence light source, a detector - photodiode, two fiber optic fiber optic couplers, a motorized linear stage, four collimators.

The measurement arm according to the invention comprises: optical fiber comprising an input fiber optic coupler, a collimator located in the end of the optical fiber comprising the input fiber optic coupler, free space, in which the phase element - a lens is mounted in a handle for the duration of measurement, a collimator located in the beginning of optical fiber comprising an output fiber optic coupler, and optical fiber comprising an output fiber optic coupler.

The reference arm of the device according to the invention comprises: optical fiber comprising an input fiber optic coupler, a collimator located in the end of the optical fiber comprising the input fiber optic coupler, free space, in which the phase element - a lens is mounted in a handle for the duration of measurement, a collimator located in the beginning of optical fiber comprising an output fiber optic coupler, and optical fiber comprising an output fiber optic coupler.

The length of the arms is divided into length in the optical fiber and length in the free space. The length of the arm in the optical fiber is standard, as listed in catalogue solutions applied in marketed fiber optic couplers and equals 1m. The length of the arms in free space is 150mm.

The light source is connected to the input fiber optic coupler whose optical fibers comprising a part of the measurement arm and reference arm are terminated with collimators, one of which is connected to a motorized linear stage, and a fiber optic coupler connected to a detector is connected to the other side of the measuring and reference arms. At the stage of measurement, a measured phase element - measured lens - is mounted in the free space of the measurement arm.

The method of measuring the parameters of the phase element and the dispersion of optical fibers, applying the device according to the invention is two-staged, wherein the first stage assumes the calibration of the device according to the invention, and the second stage is the proper measurement.

During calibration of the device according to the invention, light from the low-coherence light source 1.1 is directed to the fiber optic coupler 2.1, where it is separated into two arms: measuring and reference. Whereas, there are no phase elements in the free space of the measurement and reference arms.

Further on, the motorized linear stage 6 moves, registering information on its position until zero difference of optical paths between particular fiber optic coupler arms is obtained through an analysis of data from the detector and motorized linear stage positions. Interference takes place in the fiber optic coupler 2.2, after passing through the collimators 3.2 and 4.2, and interferogram is collected as the time function, which translates into motorized linear stage movement. Interferogram is collected by the photodetector, in particular by the photodiode.

After the device is calibrated, the system proceeds to proper measurement, in which a phase element, particularly a lens intended for measurement, is inserted in the measurement arm of the device according to the invention, between the collimators 3.1 and 3.2. Further on, sliding the motorized linear stage, the position producing zero optical path difference is determined. Basing on differential positions of the motorized linear stage for interferogram contrast maximums in the calibration measurement and in the proper measurement with the phase element, and having the refractive index of glass, from which the phase element was made, the thickness of the phase element, particularly the lens, is determined.

Signal from the low-coherence light source 1.1 is directed to the fiber optic coupler 2.1, then from the optical fibers comprising the fiber optic coupler, the signal passes to collimators 3.1 and 4.1. After leaving the collimator 3.1, light is directed to a phase element - lens 5.1 in the measurement arm, after which it is directed to a collimator 3.2. After leaving the collimator 4.1, it reaches a collimator 4.2 in the second arm, the position of which depends on the shift of the motorized linear stage 6. Signals from collimators 3.2 and 4.2 are directed to a fiber optic coupler 2.2, where they interfere. Signal from the fiber optic coupler is directed to a detector 7.1.

Due to high precision of refractive index defined in the available catalogs refractive index, we can determine the thickness of the phase element with high accuracy.

### Example 2

A device for measuring the parameters of phase elements and optical fiber dispersion comprising: a low-coherence and coherent light source, two detectors in the form of photodiodes, two fiber optic couplers, a motorized linear stage, four collimators.

The measurement arm according to the invention comprises: optical fiber comprising an input fiber optic coupler, a collimator located in the end of the optical fiber comprising the input fiber optic coupler, free space, in which the phase element - a lens is mounted in a handle for the duration of measurement, a collimator located in the beginning of optical fiber comprising an output fiber optic coupler, and optical fiber comprising an output fiber optic coupler.

The reference arm of the device according to the invention comprises: optical fiber comprising an input fiber optic coupler, a collimator located in the end of the optical fiber comprising the input fiber optic coupler, free space, a collimator located in the beginning of optical fiber comprising an output fiber optic coupler mounted on a motorized linear stage, and optical fiber comprising an output fiber optic coupler.

The length of the arms is divided into length in the optical fiber and length in the free space. The length of the arm in the optical fiber is standard, as listed in catalogue solutions applied in marketed fiber optic couplers and equals 1m. The length of the arms in free space is 150mm. Fiber optic couplers are fabricated from standard single-mode optical fibers.

The coherent light source and the detector are connected to the input fiber optic coupler whose optical fibers comprising a part of the measurement arm and reference arm are terminated with collimators, one of which is connected to a motorized linear stage, and the input fiber optic coupler connected to a second detector and the low-coherence light source is connected to the other side of the measurement and reference arms.

In the case of the coherent light source, the coherence length is higher or equal to the range of movement of the motorized linear stage.

The method of measuring the parameters of the phase element and the dispersion of optical fibers, applying the device according to the invention is two-staged, wherein the first stage assumes the calibration of the device according to the invention, and the second stage is the proper measurement.

During calibration of the device according to the invention, light from the low-coherence 1.1 and coherent 1.2 light source is directed to the fiber optic couplers 2.1 and 2.2, where it is separated into two arms: measurement and reference. Whereas, there are no phase elements in the free space of the measuring and reference arms.

The motorized linear stage moves, which causes interferogram to be registered for each of the sources. Further on, the motorized linear stage moves, recording information on its position until zero difference of optical paths between particular fiber optic coupler arms is read with the use of detectors. Interference takes place both fiber optic couplers, whereas one of them supports interference from the coherent source, and the second - from the low-coherence source. Interferograms are collected by photodetectors, in particular by photodiodes.

After the device is calibrated, the system proceeds to proper measurement, in which a phase element, particularly a lens intended for measurement, is inserted in the measurement arm of the device according to the invention, between the collimators 3.1 and 3.2. Further on, sliding the motorized linear stage, the position producing zero optical path difference is determined. Basing on differential positions of the motorized linear stage for interferogram contrast maximums in the calibration measurement and in the proper measurement with the phase element, and having the refractive index for glass, from which the phase element was made, the thickness of the phase element, particularly the lens, is determined.

Signal from the low-coherence light source 1.1 is directed to the fiber optic coupler 2.1, then from the optical fibers comprising the fiber optic coupler, the signal passes to collimators 3.1 and 4.1. After leaving the collimator 3.1, light is directed to a phase element - lens 5.1 in the measurement arm, after which it is directed to a collimator 3.2. After leaving the collimator 4.1, it reaches a collimator 4.2 in the second arm, the position of which depends on the shift of the motorized linear stage 6. Signals from collimators 3.2 and 4.2 are directed to a fiber optic coupler 2.2, where they interfere. Signal from the fiber optic coupler is directed to a detector 7.1. On the other side of the system, signal from the coherent light source 1.2 is directed to the fiber optic coupler 2.2, then from the optical fibers comprising the fiber optic coupler, the signal passes to collimators 3.2 and 4.2. After leaving the collimator 3.2, light is directed to a phase element - lens 5.1 in the measurement arm, after which it is directed to a collimator 3.2. After leaving the collimator 4.2, it reaches a collimator 4.1 in the second arm, the position of which depends on the shift of the motorized linear stage 6. Signals from collimators 3.1 and 4.1 are directed to a fiber optic coupler 2.1, where they interfere. Signal from the fiber optic coupler is directed to a detector 7.2. Thanks to the occurrence of a second light source (coherent), it is possible to increase the precision of measurement of the motorized linear stage position.

Due to high precision of refractive index defined in the available catalogs refractive index, we can determine the thickness of the phase element with high accuracy.

### Example 3

A device for measuring the parameters of phase elements and optical fiber dispersion comprising: a low-coherence light source, a detector - photodiode, two fiber optic couplers, a motorized linear stage, four collimators. As part of measurement, the specification of the measured phase element is determined on the basis of a model phase element - a model lens with familiar optical parameters and dimensions.

The measurement arm according to the invention comprises: optical fiber comprising an input fiber optic coupler, a collimator located in the end of the optical fiber comprising the input fiber optic coupler, free space, in which the phase element - a lens is mounted in a handle for the duration of measurement, a collimator located in the beginning of optical fiber comprising an output fiber optic coupler, and optical fiber comprising an output fiber optic coupler.

The reference arm of the device according to the invention comprises: optical fiber comprising an input fiber optic coupler, a collimator located in the end of the optical fiber comprising the input fiber optic coupler, free space, in which the model phase element - a model lens is mounted in a handle for the duration of proper measurement, a collimator located in the beginning of optical fiber comprising an output fiber optic coupler mounted on a motorized linear stage, and optical fiber comprising an output fiber optic coupler.

The length of the arms is divided into length in the optical fiber and length in the free space. The length of the arm in the optical fiber is standard, as listed in catalogue solutions applied in marketed fiber optic couplers and equals 1m. The length of the arms in free space is 150mm.

The light source is connected to the input fiber optic coupler whose optical fibers comprising a part of the measurement arm and reference arm are terminated with collimators, one of which is connected to a motorized linear stage, and a fiber optic coupler connected to a detector is connected to the other side of the measuring and reference arms. At the stage of measurement, a measured phase element - measurement lens - is mounted in the free space of the measurement arm, and a model phase element - model lens is mounted in the reference arm. The model phase element is mounted on a motorized linear stage.

The method of measuring the parameters of the phase element and the dispersion of optical fibers, applying the device according to the invention is two-staged, wherein the first stage assumes the calibration of the device according to the invention, and the second stage is the proper measurement.

During calibration of the device according to the invention, light from the low-coherence light source 1.1 is directed to the fiber optic coupler 2.1, where it is separated into two arms: measuring and reference. Whereas, there are no phase elements in the free space of the both arms.

Further on, the motorized linear stage 6 moves, recording information on its position until zero difference of optical paths between particular fiber optic coupler arms is read using a detector. Interference takes place in the fiber optic coupler 2.2, after passing through the collimators 3.2 and 4.2, and interferogram is collected as the time function, which translates into motorized linear stage movement. Interferogram is collected by the photodetector, in particular by the photodiode.

After the device is calibrated, the system proceeds to proper measurement, in which a phase element, particularly a lens intended for measurement, is inserted in the measurement arm of the device according to the invention, between the collimators 3.1 and 3.2. In addition, a model phase element consisting in a model lens with familiar parameters is placed between the collimators in the reference arm 4.1 and 4.2. Further on, sliding the motorized linear stage, the position producing zero optical path difference is determined. Basing on differential positions of the motorized linear stage for interferogram contrast maximums in the calibration measurement and in the proper measurement with the phase element, and having the refractive index for glass, from which the phase element was made, the thickness of the phase element, particularly the lens, is determined.

Signal from the low-coherence light source 1.1 is directed to the fiber optic coupler 2.1, then from the optical fibers comprising the fiber optic coupler, the signal passes to collimators 3.1 and 4.1. After leaving the collimator 3.1, light is directed to a phase element - lens 5.1 in the measurement arm, after which it is directed to a collimator 3.2. After leaving the collimator 4.1, it reaches a model lens 5.2 and then a collimator 4.2 in the second arm, the position of which depends on the shift of the motorized linear stage 6. Signals from collimators 3.2 and 4.2 are directed to a fiber optic coupler 2.2, where they interfere. Signal from the fiber optic coupler is directed to a detector 7.1.

Due to high precision of refractive index defined in the available catalogs refractive index, we can determine the thickness of the phase element with considerable accuracy.

### Example 4

A device for measuring the parameters of phase elements and optical fiber dispersion comprising: a low-coherence light source, a detector - photodiode, two fiber optic couplers, a motorized linear stage, one system allowing for movement along axes X and Y, four collimators. As part of measurement, the specification of the measured phase element, flat on the one side, is determined when the phase element is placed in a system enabling its movement along axes X and Y.

The measurement arm according to the invention comprises: optical fiber comprising an input fiber optic coupler, a collimator located in the end of the optical fiber comprising the input fiber optic coupler, free space, in which the phase element - a lens is mounted in a handle that enables its movement along axes X and Y for the duration of measurement, a collimator located in the beginning of optical fiber comprising an output fiber optic coupler, and optical fiber comprising an output fiber optic coupler.

The reference arm of the device according to the invention comprises: optical fiber comprising an input fiber optic coupler, a collimator located in the end of the optical fiber comprising the input fiber optic coupler, free space, in which the model phase element - a model lens is mounted in a handle for the duration of proper measurement, a collimator located in the beginning of optical fiber comprising an output fiber optic coupler mounted on a motorized linear stage, and optical fiber comprising an output fiber optic coupler.

The length of the arms is divided into length in the optical fiber and length in the free space. The length of the arm in the optical fiber is standard, as listed in catalogue solutions applied in marketed fiber optic couplers and equals 1m. The length of the arms in free space is 150mm.

The light source is connected to the input fiber optic coupler whose optical fibers comprising a part of the measurement arm and reference arm are terminated with collimators, one of which is connected to a motorized linear stage, and a fiber optic coupler connected to a detector is connected to the other side of the measuring and reference arms. At the stage of measurement, a measured phase element - flat on the one side and placed on a motorized linear stage - is mounted in the measuring optical fiber area.

The method of measuring the parameters of the phase element and the dispersion of optical fibers, applying the device according to the invention is two-staged, wherein the first stage assumes the calibration of the device according to the invention, and the second stage is the proper measurement.

During calibration of the device according to the invention, light from the low-coherence light source 1.1 is directed to the fiber optic coupler 2.1, where it is separated into two arms: measuring and reference. Whereas, there are no phase elements in the free space of the both arms.

Further on, the motorized linear stage 6 moves, recording information on its position until zero difference of optical paths between particular fiber optic coupler arms is read using a detector. Interference takes place in the fiber optic coupler 2.2, after passing through the collimators 3.2 and 4.2, and interferogram is collected as the time function, which translates into motorized linear stage movement. Interferogram is collected by the photodetector, in particular by the photodiode.

After the device is calibrated, the system proceeds to proper measurement, in which a phase element, particularly a lens intended for measurement, is inserted in the measurement arm of the device according to the invention, between the collimators 3.1 and 3.2. Further on, sliding the motorized linear stages, the position producing zero optical path difference is determined. Whereas measurement is conducted in several spots, sliding the measured phase element. Basing on differential positions of the motorized linear stage for interferogram contrast maximums in the calibration measurement and in the proper measurement with the phase element, and having the refractive index for glass, from which the phase element was made, the thickness of the phase element, particularly the lens, is determined.

Signal from the low-coherence light source 1.1 is directed to the fiber optic coupler 2.1, then from the optical fibers comprising the fiber optic coupler, the signal passes to collimators 3.1 and 4.1. After leaving the collimator 3.1, light is directed to a phase element - flat on the one side 5.3 in the measurement arm, after which it is directed to a collimator 3.2. The flat measured phase element 5.3 is mounted in a system enabling its movement along axes X and Y 8. After leaving the collimator 4.1, light reaches a collimator 4.2 in the second arm, the position of which depends on the shift of the motorized linear stage 6. Signals from collimators 3.2 and 4.2 are directed to a fiber optic coupler 2.2, where they interfere. Signal from the fiber optic coupler is directed to a detector 7.1.

Due to high precision of refractive index defined in the available catalogs refractive index, we can determine the thickness of the phase element with considerable accuracy.

### Example 5

A device for measuring the parameters of phase elements comprising: a low-coherence light source, a detector - photodiode, two fiber optic couplers, a motorized linear stage, four collimators. As part of measurement, the specification of the measured phase element mounted on one of the motorized linear stages.

The measurement arm according to the invention comprises: optical fiber comprising an input coupler, a collimator located in the end of the optical fiber comprising the input fiber optic coupler, free space, in which the phase element - a plane-parallel lens is mounted in a handle for the duration of measurement, a collimator located in the beginning of optical fiber comprising an output fiber optic coupler, and optical fiber comprising an output fiber optic coupler.

The reference arm of the device according to the invention comprises: optical fiber comprising an input fiber optic coupler, a collimator located in the end of the optical fiber comprising the input fiber optic coupler, free space, a collimator located in the beginning of optical fiber comprising an output fiber optic coupler mounted on a motorized linear stage, and optical fiber comprising an output fiber optic coupler.

The length of the arms is divided into length in the optical fiber and length in the free space. The length of the arm in the optical fiber is standard, as listed in catalogue solutions applied in marketed fiber optic couplers and equals 1m. The length of the arms in free space is 150mm. Fiber optic couplers are fabricated out of standard single-mode optical fibers.

The light source is connected to the input fiber optic coupler whose optical fibers comprising a part of the measurement arm and reference arm are terminated with collimators, one of which is connected to a motorized linear stage, and a fiber optic coupler connected to a detector is connected to the other side of the measuring and reference arms. At the stage of measurement, a measured phase element - a plane-parallel plate placed on a motorized linear stage - is mounted in the measuring optical fiber area.

The method of measuring the parameters of the phase element and the dispersion of optical fibers, applying the device according to the invention is two-staged, wherein the first stage assumes the calibration of the device according to the invention, and the second stage is the proper measurement.

During calibration of the device according to the invention, light from the low-coherence light source 1.1 is directed to the fiber optic coupler 2.1, where it is separated into two arms: measuring and reference. Whereas, there are no phase elements in the free space of the reference and measurement arms.

Further on, the motorized linear stage 6 moves, recording information on its position until zero difference of optical paths between particular fiber optic coupler arms is read using a detector. Interference takes place in the fiber optic coupler 2.2, after passing through the collimators 3.2 and 4.2, and interferogram is collected as the time function, which translates into motorized linear stage movement. Interferogram is collected by the photodetector, in particular by the photodiode.

After the device is calibrated, the system proceeds to proper measurement, in which a phase element - a plane-parallel plate intended for measurement, is inserted in the measurement arm of the device according to the invention, between the collimators 3.1 and 3.2. Further on, sliding the motorized linear stages, the position producing zero optical path difference is determined. Whereas measurement is conducted in a manner that the measurement plate is rotated at least twice by familiar angles. Basing on differential positions of the motorized linear stage for interferogram contrast maximums in the calibration measurement and in the proper measurement with the phase element and the knowledge of rotation angles, the refractive index for the phase element is determined.

Signal from the low-coherence light source 1.1 is directed to the fiber optic coupler 2.1, then from the optical fibers comprising the fiber optic coupler, the signal passes to collimators 3.1 and 4.1. After leaving the collimator 3.1, light is directed to a plate 5.4 in the measurement arm, after which it is directed to a collimator 3.2. The plate 5.4 is mounted in a system enabling its rotation by a present angle 9. After leaving the collimator 4.1, light reaches a collimator 4.2 in the second arm, the position of which depends on the shift of the motorized linear stage 6. Signals from collimators 3.2 and 4.2 are directed to a fiber optic coupler 2.2, where they interfere. Signal from the fiber optic coupler is directed to a detector 7.1.

## Claims

1. A device for measuring parameters of phase elements comprising
a low-coherence light source (1.1), connected to an input fiber optic coupler (2.1) splitting the light from the low-coherence light source (1.1) to a reference arm and a measurement arm,
a detector (7.1) configured to receive light from reference arm and measurement arm,
wherein the reference arm comprises a collimator (4.1, 4.2) located on a linear stage,
**characterized in that**, said device further has a second fiber optic coupler (2.2) connected to a second light source (1.2) delivering light to the reference arm and measurement arm and a second detector (7.2) receiving light from reference arm and measurement arm,
wherein the linear stage is motorized linear stage (6) and the second light source (1.2) is coherent light source having a coherence length greater or equal to the range of motion of the motorized linear stage (6), and wherein
the measurement arm comprises:
a first measurement collimator (3.1) connected to the input optical coupler (2.1) and facing a free space, which is adapted to receive measured phase element (5.1, 5.3, 5.4),
a second measurement collimator (3.2) located at the opposite side of the free space and facing the first measurement collimator (3.1), the second measurement collimator (3.2) being connected to the second fiber optic coupler (2.2), and
the reference arm comprises:
a first reference collimator (4.1) connected to the input fiber optic coupler (2.1) and facing a second reference collimator (4.2) connected to the second fiber optic coupler (2.2) wherein the second reference collimator (4.2) is located on the motorized linear stage (6),
wherein the input optical coupler (2.1) is connected to the second detector (7.2), and the second optical coupler (2.2) is connected to the first detector (7.1) and the second light source (1.2).

2. The device according to claim 1, **characterized in that** the reference arm comprises a model phase element (5.2) selected from a group including a lens, a plane-parallel plate, an optical fiber.

3. The device according to claim 1 or 2, **characterized in that** in the reference arm it has a system (8) movable in axes X-Y adapted for receiving measured phase element (5.3).

4. The device according to claim 1 or 2, **characterized in that** in the reference arm it has a rotable system (9) adapted for receiving measured phase element (5.4).

5. The device according to any of the preceding claims, **characterized in that** the measurement arm comprises a handle adapted to receive measured phase element (5.1; 5.2; 5.3; 5.4), wherein said handle is movable along three axes and rotable around any of these axes.

6. A method of measuring optical properties of phase element (5.1; 5.2; 5.3; 5.4), **characterized in that** it is executed with device as defined in any of the claims 1-5, wherein
light from the low-coherence light source (1.1) and light from the second light source (1.2) are directed respectively to the first (2.1) and second (2.2) fiber optic coupler inputs, where they are split into measuring arm and reference arm, and then motorized linear stage (6) is moved while simultaneously recording the intensity of the light with the first (7.1) and the second (7.2) detector to collect two interferograms as a function of time corresponding to the movement of the motorized linear stage (6), wherein
the method includes two steps:
the first step is a calibration of the device and a first position of motorized linear stage (6) producing zero optical path difference is determined from the interferograms collected with the first (7.1) and the second (7.2) detector,
the second step is a measurement step in which the measured optical element is placed in the measurement arm of the device and a second position of motorized linear stage (6) producing zero optical path difference is determined from interferograms collected with element under test placed in the measurement arm,
and the properties of element under test are determined on the basis of difference between the first position and the second position.

7. The method according to claim 8, **characterized in that** the element under test is mounted within a movable system (8).

8. The method according to claim 8 or 9, **characterized in that** the element under test is mounted within a rotable system (9).

## Patentansprüche

1. Vorrichtung zur Messung von Parametern von Phasenelementen umfassend einer niedrigkohärenten Lichtquelle (1.1), die mit einem Eingang des faseroptischen Kopplers (2.1) verbunden ist, der das Licht von der niedrigkohärenten Lichtquelle (1.1) auf einen Referenzarm und einen Messarm aufteilt,
einem Detektor (7.1), der so konfiguriert ist, dass er Licht vom Referenzarm und vom Messarm empfängt,
wobei der Referenzarm einen Kollimator (4.1, 4.2) umfasst, der sich auf einem Lineartisch befindet, **dadurch gekennzeichnet, dass** die Vorrichtung außerdem einen zweiten faseroptischen Koppler (2.2) aufweist, der mit einer zweiten Lichtquelle (1.2) verbunden ist, die Licht an den Referenzarm und an den Messarm liefert, und einen zweiten Detektor (7.2), der Licht vom Referenzarm und vom Messarm empfängt,
wobei der Lineartisch ein motorisierter Lineartisch (6) ist und die zweite Lichtquelle (1.2) eine kohärente Lichtquelle mit einer Kohärenzlänge ist, die größer oder gleich dem Bewegungsbereich des motorisierten Lineartisches (6) ist, und wobei
der Messarm umfasst:
einen ersten Messkollimator (3.1), der mit dem Eingang desoptischer Koppler (2.1) verbunden ist und einem freien Bereich zugekehrt ist, der dazu dient, ein gemessenes Phasenelement (5.1, 5.3, 5.4) zu empfangen,
einen zweiten Messkollimator (3.2), der sich auf der gegenüberliegenden Seite des freien Bereichs befindet und dem ersten Messkollimator (3.1) gegenüberliegt, wobei der zweite Messkollimator (3.2) mit dem zweiten faseroptischen Koppler (2.2) verbunden ist, und
der Referenzarm umfasst:
einen ersten Referenzkollimator (4.1), der mit einem Eingang des faseroptischen Kopplers (2.1) verbunden ist und einem zweiten Referenzkollimator (4.2) gegenüberliegt, der mit dem zweiten faseroptischen Koppler (2.2) verbunden ist, wobei der zweite Referenzkollimator (4.2) auf dem motorisierten Lineartisch (6) angeordnet ist,
wobei des Eingangs der optische Koppler (2.1) mit dem zweiten Detektor (7.2) verbunden ist und der zweite der optische Koppler (2.2) mit dem ersten Detektor (7.1) und der zweiten Lichtquelle (1.2) verbunden ist.

2. Vorrichtung nach Anspruch 1, **dadurch gekennzeichnet, dass** der Referenzarm ein Modellphasenelement (5.2) umfasst, das aus einer Gruppe ausgewählt ist, die eine Linse, eine planparallele Platte und eine Lichtleitfaser einschließt.

3. Die Vorrichtung nach Anspruch 1 oder 2, **dadurch gekennzeichnet, dass** sie im Referenzarm ein in den Achsen X-Y bewegliches System (8) aufweist, das zur Aufnahme des gemessenen Phasenelements (5.3) geeignet ist.

4. Die Vorrichtung nach Anspruch 1 oder 2, **dadurch gekennzeichnet, dass** sie im Referenzarm ein drehbares System (9) aufweist, das zur Aufnahme eines gemessenen Phasenelements (5.4) geeignet ist.

5. Die Vorrichtung nach einem der vorhergehenden Ansprüche, **dadurch gekennzeichnet, dass** der Messarm einen Griff zur Aufnahme des gemessenen Phasenelements (5.1; 5.2; 5.3; 5.4) umfasst, wobei der Griff entlang dreier Achsen beweglich und um jede dieser Achsen drehbar ist.

6. Verfahren zur Messung der optischen Eigenschaften eines Phasenelements (5.1; 5.2; 5.3; 5.4), **dadurch gekennzeichnet, dass** es mit einer Vorrichtung nach einem der Ansprüche 1-5 durchgeführt wird, wobei
Licht von der niedrigkohärenten Lichtquelle (1.1) und Licht von der zweiten Lichtquelle (1.2) auf
den ersten (2.1) und zweiten (2.2) Eingänge des faseroptischen Kopplerss gerichtet werden, wo sie in einen Messarm und einen Referenzarm aufgeteilt werden, und
dann der motorisierte Lineartisch (6) bewegt wird, während gleichzeitig die Intensität des Lichts mit dem ersten (7.1) und dem zweiten (7.2) Detektor aufgezeichnet wird, um zwei Interferogramme als Funktion der Zeit entsprechend der Bewegung des motorisierten Lineartisches (6) zu erfassen, wobei
das Verfahren zwei Schritte beinhaltet:
der erste Schritt ist eine Kalibrierung der Vorrichtung und eine erste Position des motorisierten Lineartisches (6), die eine optische Wegdifferenz von Null erzeugt, wird anhand der mit dem ersten (7.1) und dem zweiten (7.2) Detektor erfassten Interferogramme bestimmt,
der zweite Schritt ist ein Messschritt, bei dem das gemessene optische Element im Messarm der Vorrichtung platziert wird und eine zweite Position des motorisierten Lineartisches (6), die eine optische Wegdifferenz von Null erzeugt, anhand von Interferogrammen bestimmt wird, die mit dem im Messarm platzierten zu prüfenden Element erfasst wurden,
und die Eigenschaften des zu prüfenden Elements werden auf der Grundlage der Differenz zwischen der ersten Position und der zweiten Position bestimmt.

7. Verfahren nach Anspruch 8, **dadurch gekennzeichnet, dass** das zu prüfende Element in einem beweglichen System (8) angebracht ist.

8. Verfahren nach Anspruch 8 oder 9, **dadurch gekennzeichnet, dass** das zu prüfende Element in einem drehbaren System (9) montiert ist.

## Revendications

1. Un appareil de mesure des paramètres des éléments de phase comprenant
une source de lumière à faible cohérence (1.1), connectée à un coupleur à fibre optique d'entrée (2.1) divisant la lumière depuis la source de lumière à faible cohérence (1.1) jusqu'à un bras de référence et un bras de mesure,
un détecteur (7.1) configuré pour recevoir la lumière du bras de référence et du bras de mesure, dans lequel le bras de référence comprend un collimateur (4.1, 4.2) situé sur une platine linéaire, **caractérisé en ce que**, ledit appareil dispose d'un second coupleur à fibre optique (2.2) connecté à une seconde source de lumière (1.2) délivrant de la lumière au bras de référence et au bras de mesure, et un deuxième détecteur (7.2) recevant la lumière du bras de référence et du bras de mesure,
dans lequel la platine linéaire est une platine linéaire motorisée (6) et la seconde source de lumière (1.2) est une source de lumière cohérente ayant une longueur de cohérence supérieure ou égale à l'amplitude de mouvement de la platine linéaire motorisée (6), et dans lequel
le bras de mesure comprend :
un premier collimateur de mesure (3.1) connecté au coupleur optique d'entrée (2.1) et faisant face à un espace libre, lequel est adapté pour recevoir un élément de phase mesuré (5.1, 5.3, 5.4),
un second collimateur de mesure (3.2) situé de l'autre côté de l'espace libre et faisant face au premier collimateur de mesure (3.1), le second collimateur de mesure (3.2) étant connecté au second coupleur à fibre optique (2.2), et
le bras de référence comprend :
un premier collimateur de référence (4.1) connecté au coupleur à fibre optique d'entrée (2.1) et faisant face à un second collimateur de référence (4.2) connecté au second coupleur à fibre optique (2.2) dans lequel le second collimateur de référence (4.2) se situe sur la platine linéaire motorisée (6),
dans lequel le coupleur optique d'entrée (2.1) est connecté au second détecteur (7.2), et le second coupleur optique (2.2) est connecté au premier détecteur (7.1) et à la seconde source de lumière (1.2).

2. L'appareil selon la revendication 1, **caractérisé en ce que** le bras de référence comprend un élément de phase modèle (5.2) sélectionné à partir d'un groupe comprenant une lentille, une lame plane parallèle, une fibre optique.

3. L'appareil selon la revendication 1 ou 2, **caractérisé en ce que** dans le bras de référence est présent un système (8) mobile sur les axes X-Y adapté pour recevoir l'élément de phase mesuré (5.3).

4. L'appareil selon la revendication 1 ou 2, **caractérisé en ce que** dans le bras de référence est présent un système orientable (9) adapté pour recevoir l'élément de phase mesuré (5.4).

5. L'appareil selon l'une quelconque des revendications précédentes, **caractérisé en ce que** le bras de mesure comprend une poignée adaptée pour recevoir l'élément de phase mesuré (5.1 ; 5.2 ; 5.3 ; 5.4), dans lequel ladite poignée est mobile le long de trois axes et orientable autour de l'un quelconque de ces axes.

6. Une méthode de mesure des propriétés optiques de l'élément de phase (5.1 ; 5.2 ; 5.3 ; 5.4), **caractérisée en ce qu'**elle est mise en œuvre avec l'appareil, telle que défini dans l'une quelconque des revendications 1 à 5, dans laquelle
la lumière provenant de la source de lumière à faible cohérence (1.1) et la lumière provenant de la
seconde source de lumière (1.2) sont respectivement dirigées vers les entrées du premier (2.1) et du second (2.2) coupleur à fibre optique, où elles sont réparties dans le bras de mesure et le bras de référence, et
ensuite la platine linéaire motorisée (6) est déplacée alors qu'il est procédé à l'enregistrement simultané de l'intensité de la lumière avec le premier (7.1) et le second (7.2) détecteur pour recueillir deux interférogrammes en fonction du temps correspondant au mouvement de la platine linéaire motorisée (6), dans lequel
la méthode comprend deux étapes :
la première étape consistant en l'étalonnage de l'appareil, et une première position de la platine linéaire motorisée (6) produisant une différence de trajet optique de zéro est déterminée à partir des interférogrammes recueillis avec le premier (7.1) et le second (7.2) détecteur,
la deuxième étape est une étape de mesure dans laquelle l'élément optique mesuré est placé dans le bras de mesure de l'appareil, et une seconde position de la platine linéaire motorisée (6) produisant une différence de trajet optique de zéro est déterminée à partir des interférogrammes recueillis avec l'élément testé placé dans le bras de mesure,
et les propriétés de l'élément testé sont déterminées sur la base de la différence entre la première et la seconde position.

7. La méthode selon la revendication 8, **caractérisée en ce que** l'élément testé est installé à l'intérieur d'un système mobile (8).

8. La méthode selon la revendication 8 ou 9, **caractérisée en ce que** l'élément testé est installé à l'intérieur d'un système orientable (9).
